(19) Europäisches Patentamt
European Patent Office
Office européen des brevets

(11) **EP 3 611 481 B1**

(12) **EUROPÄISCHE PATENTSCHRIFT**

(45) Veröffentlichungstag und Bekanntmachung des Hinweises auf die Patenterteilung:
**11.10.2023 Patentblatt 2023/41**

(21) Anmeldenummer: **18189574.9**

(22) Anmeldetag: **17.08.2018**

(51) Internationale Patentklassifikation (IPC):
**G01F 23/288** *(2006.01)* **G01F 25/20** *(2022.01)*
**G01N 9/24** *(2006.01)* **G01C 13/00** *(2006.01)*

(52) Gemeinsame Patentklassifikation (CPC):
**G01F 23/288; G01F 23/2885; G01F 25/20;**
**G01N 9/24;** G01C 13/008

(54) **MESSVORRICHTUNG UND VERFAHREN ZUR BESTIMMUNG EINES FÜLLSTANDS EINES MEDIUMS MITTELS SEKUNDÄRER KOSMISCHER STRAHLUNG**

MEASURING DEVICE AND METHOD FOR DETERMINING A MEDIUM FILL LEVEL BY MEANS OF SECONDARY COSMIC RADIATION

DISPOSITIF DE MESURE ET PROCÉDÉ DE DETERMINATION D'UN NIVEAU DE REMPLISSAGE D'UN MILIEU À L'AIDE DE RAYONNEMENT SECONDAIRE COSMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.02.2020 Patentblatt 2020/08**

(73) Patentinhaber: **VEGA Grieshaber KG**
**77709 Wolfach (DE)**

(72) Erfinder: **DIETERLE, Levin**
**77709 Oberwolfach (DE)**

(74) Vertreter: **Maiwald GmbH**
**Elisenhof**
**Elisenstraße 3**
**80335 München (DE)**

(56) Entgegenhaltungen:
JP-A- 2008 014 816   US-A- 5 218 202
US-A1- 2011 035 151   US-A1- 2015 287 237
US-A1- 2016 170 072

- S. PROCUREUR: "Muon imaging: Principles, technologies and applications", NUCLEAR INSTRUMENTS & METHODS IN PHYSICS RESEARCH. SECTION A, Bd. 878, 7. September 2017 (2017-09-07), Seiten 169-179, XP055515432, NL ISSN: 0168-9002, DOI: 10.1016/j.nima.2017.08.004
- G. SARACINO ET AL: "Imaging of underground cavities with cosmic-ray muons from observations at Mt. Echia (Naples)", SCIENTIFIC REPORTS, Bd. 7, Nr. 1, 26. April 2017 (2017-04-26), XP055497177, DOI: 10.1038/s41598-017-01277-3
- HARUO MIYADERA ET AL: "Imaging Fukushima Daiichi reactors with muons", AIP ADVANCES, Bd. 3, Nr. 5, 24. Mai 2013 (2013-05-24), Seite 052133, XP055560129, 2 Huntington Quadrangle, Melville, NY 11747 ISSN: 2158-3226, DOI: 10.1063/1.4808210
- T. KUWABARA ET AL: "Real-time cosmic ray monitoring system for space weather : COSMIC RAY MONITORING SYSTEM", SPACE WEATHER, Bd. 4, Nr. 8, 1. August 2006 (2006-08-01), Seiten n/a-n/a, XP055591063, US ISSN: 1542-7390, DOI: 10.1029/2005SW000204

## Beschreibung

### Gebiet der Erfindung

Die Erfindung betrifft allgemein eine Messvorrichtung zur Bestimmung eines Füllstandes eines Mediums mittels Detektion von Teilchen der sekundären kosmischen Strahlung, insbesondere von sekundären kosmischen Myonen. Ferner betrifft die Erfindung die Verwendung einer solchen Messvorrichtung als Grenzstandmessgerät zur Ermittlung eines Grenzstandes des Mediums sowie ein Verfahren zur Bestimmung des Füllstandes des Mediums mit einer solchen Messvorrichtung.

### Hintergrund der Erfindung

Zur Bestimmung eines Füllstandes, eines Grenzstandes und/oder einer Dichte eines Mediums in einem Behälter, werden mitunter radiometrische Messgeräte verwendet, welche eine Intensität radioaktiver Strahlung, die von einer radioaktiven Strahlenquelle (z.B. $^{60}$Co oder $^{137}$Cs) emittiert wird, mit einem Detektor (z.B. einem Szintillationszähler) nach Durchtritt der Strahlung durch den Behälter ermitteln. Aufgrund von Wechselwirkungen der Strahlung mit dem Medium, insbesondere Streuung und Absorption, kann über die gemessene Intensität der Strahlung der Füllstand, das Erreichen eines Grenzstandes und/oder die Dichte des Mediums ermittelt werden.

Derartige radiometrische Messgeräte nehmen in der Regel einen großen Bauraum in Anspruch. Auch eine Installation solcher Messgeräte an einem Messort ist mitunter aufwändig, nicht zuletzt aufgrund von einzuhaltenden Strahlenschutzbestimmungen. Beispielsweise ist zur Abschirmung der radioaktiven Strahlung meist ein Strahlenschutzbehälter vorgesehen, der die Strahlung während des Betriebs nur in Richtung des Detektors austreten lässt. Auch kann ein Justieren des radioaktiven Strahlers relativ zu dem gegenüberliegend angeordneten Detektor mitunter zeitaufwändig sein.

US 2011/035151 A1 beschreibt ein System und ein Verfahren zur Durchführung unterirdischer Kernmessungen für eine Dichtemessung, wobei das System mehrere längliche Szintillatorelemente, eine optische Detektoreinheit und ein Gehäuse umfasst.

S.Procureur, "Muon imaging: Principles, technologies and applications", NUCLEAR INSTRUMENTS & METHODS IN PHYSICS RESEARCH. SECTION A, Bd. 878,7. September 2017, S. 169-179, offenbart einen Überblick über verschiedene Technologien zur Myonen-Bildgebung.

US 5 218 202 A beschreibt die Optimierung einer radiometrischen Füllstandmessung mit einem radioaktiven Strahler bzw. einer Kobaltquelle.

US 2016/0170072 A1 beschreibt eine Methode zur Detektion von Materialien mit hohem Atomgewicht in einem Volumen wie z. B. in einem LKW oder einem Frachtcontainer.

US 2015/287237 A1 beschreibt ein Verfahren zur Abbildung von Ladungsteilchen in einem interessierenden Volumen durch ein Ladungsteilchen-Tomographiesystem.

G. Saracino et al. "Imaging of underground cavities with cosmic-ray muons from observations at Mt. Echia (Naples)", SCIENTIFIC REPORTS, Bd.7, Nr. 1, 26. April 2017, offenbaren eine Messung von unterirdischen Kavitäten mit kosmischen Myonen auf dem Mount Echia in Neapel.

Haruo Miyadera et al., "Imaging Fukushima Daiichi reactors with muons", AIP ADVANCES, Bd.3, Nr. 5, 24. Mai 2013, Seite 052133 beschreiben die Abbildung der Fukushima Daiichi-Reaktoren mittels Myonen.

T. Kuwabara et al. "Real-time cosmic ray monitoring system for space weather : COSMIC RAY MONITORING SYSTEM", SPACE WEATHER, Bd. 4, Nr. 8, 1. August 2006 beschreiben die Überwachung des Weltraumwetters unter Verwendung von Neutronenoder Myonen-Detektoren, welche an verschiedenen geografischen Positionen der Erde positioniert sind.

### Zusammenfassung der Erfindung

Die Erfindung betrifft eine Messvorrichtung zur Bestimmung eines Füllstands eines Mediums gemäß Anspruch 1. Optionale Merkmale der Messvorrichtung sind in den abhängigen Ansprüchen 2 bis 12 definiert. Die Erfindung betrifft zudem eine Verwendung einer derartigen Messvorrichtung als Grenzstandmessgerät gemäß Anspruch 13, sowie ein Verfahren zur Bestimmung eines Füllstands eines Mediums mit einer derartigen Messvorrichtung gemäß Anspruch 14.

Die Erfindung ermöglicht in vorteilhafter Weise, eine im Vergleich zur radiometrischen Messung, vereinfachte, kostengünstigere und/oder platzsparendere Messvorrichtung zur Füllstandmessung, Grenzstandmessung eines Mediums. Nachfolgend sind eine Messvorrichtung zur Erfassung eines Füllstandes eines Mediums, die Verwendung einer solchen Messvorrichtung als Grenzstandmessgerät und ein Verfahren zur Bestimmung des Füllstandes des Mediums mit einer solchen Messvorrichtung angegeben

Die nachfolgende Beschreibung betrifft gleichermaßen die Messvorrichtung, die Verwendung der Messvorrichtung als Grenzstandmessgerät sowie das Verfahren.

Merkmale und/oder Elemente, welche nachfolgend mit Bezug auf die Messvorrichtung, die Verwendung derselben oder das Verfahren beschrieben sind, gelten gleichermaßen für die Messvorrichtung, die Verwendung derselben und das Verfahren.

Ein erster Aspekt der vorliegenden Offenbarung betrifft eine Messvorrichtung, etwa eine Füllstandmessvorrichtung, welche zur Bestimmung eines Füllstandes eines Mediums, insbesondere einer Flüssigkeit und/oder eines Feststoffes, eingerichtet ist. Die Messvorrichtung weist einen richtungsselektiven und/oder richtungsauflösenden Detektor auf, welcher dazu eingerichtet ist, Teilchen der sekundären kosmischen Strahlung nach zumindest teilweisem Durchtritt durch das Medium (bzw. eines Behälters mit dem Medium) und/oder teilweisem Durchqueren des Mediums (bzw. eines Behälters mit dem Medium) zu detektieren und eine mit einer Flussrate der Teilchen der sekundären kosmischen Strahlung am Ort der Messvorrichtung korrelierende Detektorzählrate zu ermitteln. Die Messvorrichtung weist ferner eine Auswerteeinheit auf. Die Auswerteeinheit kann etwa eine Auswerteschaltung, eine Steuereinheit und/oder ein Steuergerät bezeichnen. Die Auswerteeinheit ist dazu eingerichtet, basierend auf der von dem Detektor ermittelten Detektorzählrate und basierend auf Messdaten, welche mit wenigstens einem Einfluss auf die Flussrate der Teilchen sekundärer kosmischer Strahlung am Ort der Messvorrichtung (und/oder am Ort des Detektors) in Zusammenhang stehen, den wenigstens einen Einfluss beschreiben und/oder repräsentativ für den wenigstens einen Einfluss sind, eine auf den wenigstens einen Einfluss korrigierte Zählrate zu ermitteln. Ferner ist die Auswerteeinheit dazu eingerichtet, basierend auf der korrigierten Zählrate den Füllstand des Mediums zu bestimmen.

Die Erfindung zielt somit darauf ab, den Füllstand des Mediums mittels Detektion von Teilchen der sekundären kosmischen Strahlung, welche das Medium und/oder einen Behälter mit dem Medium zumindest teilweise durchquert haben, zu ermitteln. Auf eine radioaktive Strahlenquelle, wie sie bei konventionellen radiometrischen Messvorrichtungen verwendet wird, kann daher in vorteilhafter Weise verzichtet werden. Die erfindungsgemäße Messvorrichtung kann daher verhältnismäßig kompakt ausgebildet sein und/oder kosteneffizient produziert werden. Auch kann ein Installationsaufwand für die Messvorrichtung am Messort stark reduziert sein. Auch eine herstellerseitige Zulassung der Messvorrichtung kann erheblich vereinfacht sein, da die erfindungsgemäße Messvorrichtung keine radioaktive Strahlenquelle (z.B. eine $^{60}$Co- oder $^{137}$Cs-Quelle) aufweist. Ferner kann ein Betrieb der Messvorrichtung vereinfacht sein, da Reglementierungen des Strahlenschutzes für den Betrieb unerheblich sind und/oder da keine weiteren Vorkehrungen zum Strahlenschutz erforderlich sind.

Der richtungsselektive Detektor kann einen Akzeptanzwinkel aufweisen, innerhalb dessen Teilchen der sekundären kosmischen Strahlung detektiert werden. Der Akzeptanzwinkel kann gleichsam einen Raumwinkel bezeichnen, innerhalb dessen der Detektor Teilchen der sekundären kosmischen Strahlung detektiert. Zur Detektion der Teilchen sekundärer kosmischer Strahlung kann der Detektor derart relativ zu dem Medium angeordnet und/oder positioniert sein, dass er zumindest auch Teilchen der sekundären kosmischen Strahlung detektiert, welche das Medium und/oder den Behälter zumindest teilweise durchquert haben. Mit anderen Worten kann der Detektor derart relativ zu dem Medium angeordnet und/oder positioniert sein, dass das Medium und/oder der Behälter zumindest teilweise in dem Akzeptanzwinkel des Detektors angeordnet ist.

Generell kann der richtungsselektive Detektor ein beliebiger Detektor zur Detektion von Myonen, Elektronen, Positronen, Photonen, Pionen und/oder Neutronen, der sekundären kosmischen Strahlung sein. Beispielsweise kann der Detektor wenigstens einen Szintillationszähler, wenigstens ein Gaszählrohr, wenigstens einen Proportionalzähler, wenigstens einen Flüssigdetektor, wenigstens einen organischen Detektor, wenigstens einen anorganischen Detektor und/oder wenigstens einen beliebigen anderen Detektor aufweisen.

Aufgrund von Wechselwirkungen der Teilchen sekundärer kosmischer Strahlung mit dem Medium, insbesondere elastischer Streuung, inelastischer Streuung, Ionisation, und/oder Absorption, und/oder aufgrund von Zerfallsprozessen der Teilchen bei Durchtritt durch das Medium kann die Detektorzählrate durch das Medium, etwa durch die Masse, das Volumen und/oder die Dichte des Mediums, beeinflusst sein. Somit kann basierend auf der Detektorzählrate der Füllstand des Mediums bestimmt werden.

Die Flussrate von Teilchen der sekundären kosmischen Strahlung kann etwa eine Anzahl von Teilchen pro Flächeneinheit und pro Zeiteinheit bezeichnen, welche auf den Detektor treffen. Die Flussrate kann gleichsam einen Fluss, eine Intensität und/oder eine Fluenzrate der Teilchen bezeichnen, welche auf den Detektor treffen und/oder mit diesem detektiert werden. Die Detektorzählrate kann eine gemessene Zählrate des Detektors bezeichnen. Die Detektorzählrate kann beispielsweise in Einheiten von Ereignissen bzw. Messereignissen pro Zeiteinheit gegeben sein.

In der Messvorrichtung, etwa in einem Datenspeicher der Messvorrichtung, können Softwareinstruktionen gespeichert sein, welche bei deren Ausführung durch die Messvorrichtung, durch einen Prozessor der Messvorrichtung und/oder durch die Auswerteeinheit die Messvorrichtung veranlassen, den Füllstand und/oder die Dichte des Mediums zu bestimmen, so wie voranstehend und nachfolgend beschrieben. Ein solcher Prozessor kann beispielsweise Teil der Auswerteeinheit sein.

Die Erfindung kann insbesondere als auf den nachfolgend beschriebenen Erkenntnissen beruhend angesehen werden. Primäre kosmische Strahlung umfasst galaktische kosmische Strahlung, welche vornehmlich in stellaren Ereignissen, wie etwa einer Supernova, entsteht, sowie solare kosmische Strahlung, welche in Form des Sonnenwindes und/oder durch Eruptionen von der Sonne ausgestoßen wird. Sowohl die galaktische als auch die solare kosmische Strahlung bestehen primär aus Protonen und einem geringen Anteil anderer Ionen oder Kernteilchen, wie etwa He-Kernen oder schwereren Kernen. Trifft die primäre kosmische Strahlung auf die Erdatmosphäre, so entsteht aufgrund von Wechselwirkungen mit den Molekülen und Atomen der Erdatmosphäre und/oder aufgrund von Zerfallsprozessen eine Vielzahl von Teilchen der sekundären kosmischen Strahlung, unter anderem Elektronen, Positronen, Pionen, Photonen, Myonen, Neutrinos und/oder Neutronen. Da Teilchen der galaktischen kosmischen Strahlung im Vergleich zur solaren kosmischen Strahlung in der Regel wesentlich höhere Energien besitzen, wird die sekundäre kosmische Strahlung in der Erdatmosphäre vornehmlich durch die galaktische kosmische Strahlung erzeugt. Aufgrund konkurrierender Prozesse, insbesondere der Erzeugung sekundärer Teilchen, der Absorption und des Zerfalls eines Teils dieser sekundären Teilchen, nimmt der Fluss und/oder die Flussrate der Teilchen sekundärer kosmischer Strahlung in der oberen Erdatmosphäre bis zu einer atmosphärischen Tiefe von rund 100g/cm$^2$ zu (sogenanntes Pfotzer-Maximum), was einer Höhe über dem Erdboden von rund 16 km entspricht (in der US Standard-Atmosphäre). In tiefer liegenden erdatmosphärischen Schichten und/oder in geringerer Höhe über dem Erdboden nimmt der Fluss und/oder die Flussrate der Teilchen sekundärer kosmischer Strahlung aufgrund des Überwiegens von Absorption, Streuung und Zerfall der Teilchen der sekundären kosmischen Strahlung gegenüber deren Erzeugung kontinuierlich bis auf Meeresniveau (rund 1000g/cm$^2$ atmosphärischer Tiefe) ab. Eine am Erdboden detektierte Flussrate von Teilchen der sekundären kosmischen Strahlung ist somit fundamental durch die Masse der Erdatmosphäre zwischen dem Detektor und dem Entstehungsort der Teilchen innerhalb der Erdatmosphäre beeinflusst. Diese Masse der Erdatmosphäre unterliegt ferner Wettereinflüssen, wie z. B. einer mittleren Temperatur der Erdatmosphäre und/oder einem Luftdruck. Aus diesem Grund variiert eine mit einem Detektor in Bodennähe gemessene Zählrate (bzw. Detektorzählrate) beispielsweise mit dem am Messort bzw. am Ort der Messvorrichtung vorherrschenden Luftdruck. Erdatmosphärische Einflüsse, wie Temperaturänderungen und/oder Luftdruckänderungen, können daher die Flussrate der Teilchen sekundärer kosmischer Strahlung und/oder die Detektorzählrate beeinflussen.

Des Weiteren ist ein Fluss primärer kosmischer Strahlung in Erdnähe zeitlichen Schwankungen oder Variationen unterworfen. Diese Schwankungen sind mitunter auf zeitliche Änderungen der Sonnenaktivität zurückzuführen, welche eine Periodizität von rund elf Jahren aufweist (sogenannter Sonnenzyklus). In Zeiten maximaler Sonnenaktivität ist die Intensität des Sonnenwindes sowie eine räumliche Ausdehnung der Heliosphäre maximal. Aufgrund von Wechselwirkungen der galaktischen kosmischen Strahlung mit der solaren kosmischen Strahlung in der Heliosphäre sowie aufgrund von Einflüssen der solaren kosmischen Strahlung auf das interplanetare Magnetfeld nimmt der Fluss galaktischer kosmischer Strahlung in Erdnähe, und somit auch der auf die Erdatmosphäre treffende Fluss primärer kosmischer Strahlung, mit steigender Sonnenaktivität ab, und umgekehrt. Dies hat zur Folge, dass die Flussraten sekundärer kosmischer Strahlung in der Erdatmosphäre und am Erdboden einer quasi-periodischen Modulation durch die Sonnenaktivität unterliegen. Allgemein können die Sonnenaktivität, die Intensität des Sonnenwindes sowie die Intensität galaktischer kosmischer Strahlung in Erdnähe als Weltraumwetter bezeichnet werden. Mit anderen Worten unterliegt eine Flussrate von Teilchen der sekundären kosmischen Strahlung auch Einflüssen des Weltraumwetters, der Intensität des Sonnenwindes und/oder der Sonnenaktivität.

Auch hat die Intensität des Sonnenwindes und somit die Sonnenaktivität Einfluss auf die Magnetosphäre der Erde, welche niederenergetische Teilchen primärer kosmischer Strahlung in Abhängigkeit der geographischen Position von der Erde abschirmt. Auch ein Zustand der Magnetosphäre, etwa eine räumliche Ausdehnung der Magnetosphäre, beeinflusst somit die Flussrate sekundärer kosmischer Strahlung in Bodennähe. Neben Einflüssen des Sonnenwindes ist die Magnetosphäre auch weiteren Änderungen unterworfen, wie etwa einer Änderung der geographischen Position der Pole des Erdmagnetfeldes und/oder einer Änderung der Magnetfeldstärke des Erdmagnetfeldes. Auch derartige Einflüsse können die Flussrate sekundärer kosmischer Strahlung und damit die Detektorzählrate beeinflussen.

Zusammenfassend wird die Flussrate sekundärer kosmischer Strahlung in Bodennähe durch Wetterbedingung auf der Erde, durch erdatmosphärische Bedingungen, durch das Weltraumwetter und/oder durch die Magnetosphäre der Erde beeinflusst. Entsprechend ist auch eine Messung des Füllstandes eines Mediums basierend auf einer Detektion von Teilchen der sekundären kosmischen Strahlung solchen Einflüssen unterworfen. Um diesem Umstand Rechnung zu tragen, schlägt die vorliegende Erfindung vor, die Detektorzählrate basierend auf Messdaten, welche mit wenigstens einem Einfluss auf die Flussrate der Teilchen sekundärer kosmischer Strahlung am Ort der Messvorrichtung in Zusammenhang stehen, zu korrigieren. Zum einen kann dadurch eine Messgenauigkeit bei der Bestimmung des Füllstandes gesteigert werden. Zum anderen kann beispielsweise auf einen Referenzdetektor verzichtet werden, welcher etwa die Flussrate von Teilchen sekundärer kosmischer Strahlung, welche das Medium nicht durchquert haben, am Ort der Messvorrichtung bestimmt. Damit kann die erfindungsgemäße Messvorrichtung erheblich platzsparender und kostengünstiger ausgestaltet werden.

Der wenigstens eine Einfluss, der mit der Flussrate von Teilchen am Ort der Messvorrichtung in Zusammenhang steht und der von der Auswerteeinheit basierend auf den Messdaten korrigiert wird, kann somit einen Einfluss bezeichnen, welcher nicht durch das Medium und/oder einen Behälter hervorgerufen ist.

Allgemein kann aufgrund der Korrektur der Detektorzählrate auf den wenigstens einen Einfluss auf die Flussrate der Teilchen sekundärer kosmischer Strahlung am Ort der Messvorrichtung eine verbesserte, kompakte und kostengünstige Messvorrichtung zur Bestimmung des Füllstandes bereitgestellt werden. Zur Bestimmung des Füllstandes kann die Auswerteeinheit etwa dazu eingerichtet sein, den Füllstand basierend auf einer relativen Änderung der korrigierten Zählrate zwischen zwei Messzeitpunkten zu bestimmen. Die Auswerteeinheit kann alternativ oder ergänzend dazu eingerichtet sein, den Füllstand basierend auf (und/oder unter Heranziehung von) einem oder mehreren Kalibrierwerten zu bestimmen. Derartige Kalibrierwerte können etwa in einem Datenspeicher der Messvorrichtung hinterlegt sein und/oder über ein Kommunikationsmodul der Messvorrichtung empfangen und/oder abgerufen werden.

Die Messvorrichtung weist genau einen Detektor zur Detektion sekundärer kosmischer Strahlung auf. Wie voranstehend erläutert, kann aufgrund der Korrektur der Detektorzählrate basierend auf den Messdaten auf einen Referenzdetektor am Ort der Messvorrichtung verzichtet werden. Somit kann die Messvorrichtung kompakt und kostengünstig ausgestaltet werden.

Gemäß einer Ausführungsform ist der Detektor dazu eingerichtet, Myonen der sekundären kosmischen Strahlung zu detektieren. Alternativ oder zusätzlich ist der Detektor dazu eingerichtet, eine mit einer Flussrate von sekundären kosmischen Myonen korrelierende Detektorzählrate zu ermitteln. Aufgrund ihrer hohen Eindringtiefe und/oder ihres hohen Durchdringungsvermögens eignen sich Myonen im Vergleich zu anderen Teilchen der sekundären kosmischen Strahlung besonders gut für die Bestimmung des Füllstandes des Mediums. Die Erfindung ist jedoch keineswegs auf die Detektion von Myonen beschränkt, sondern es können auch andere Teilchen der sekundären kosmischen Strahlung zur Bestimmung des Füllstandes detektiert werden, beispielsweise Elektronen, Positronen, Photonen und/oder Neutronen.

Die Messvorrichtung kann somit eine Myonen-Messvorrichtung zur Bestimmung des Füllstandes des Mediums mittels Myonen bezeichnen. Wie voranstehend erläutert, entstehen Myonen in der Erdatmosphäre durch Kollision hochenergetischer primärer kosmischer Strahlung (hauptsächlich Protonen) mit Atomen und Molekülen der Erdatmosphäre als sekundäre Teilchen. Der Großteil der kosmischen Myonen entsteht hierbei als Zerfallsprodukt von Pionen-Zerfallsprozessen. Aufgrund ihrer hohen Masse (ca. 200-mal schwerer als ein Elektron) und hohen Energie (mehrere GeV bis TeV) - sowie damit einhergehenden relativistischen Effekten, wie Zeitdilatation - besitzen Myonen ein hohes Durchdringungsvermögen für Materie und sind somit kaum bis gar nicht abschirmbar, etwa durch die Erdatmosphäre. Beim Durchgang durch Materie, insbesondere das zu vermessende Medium, verlieren Myonen beispielsweise aufgrund von Ionisierungen in Abhängigkeit der Dichte, der Masse und/oder des Volumens des Mediums Energie. Niederenergetische Myonen werden somit vollständig abgebremst und zerfallen. Basierend auf der Detektorzählrate und/oder basierend auf der korrigierten Zählrate kann daher der Füllstand des Mediums präzise bestimmt werden.

Gemäß einer Ausführungsform umfassen die Messdaten wenigstens ein Element ausgewählt aus der Gruppe bestehend aus: Wetterdaten zur Beschreibung wenigstens eines Parameters (z.B. Luftdruck, Temperatur, Höhe der 100 hPa Isobaren, Temperatur der 100 hPa Isobaren, effektive Temperatur) der Erdatmosphäre, Luftdruckdaten eines erdatmosphärischen Luftdrucks, Temperaturdaten zur Beschreibung einer Temperatur der Erdatmosphäre, Wetterdaten zur Beschreibung einer effektiven Temperatur der Erdatmosphäre, Wetterdaten zur Beschreibung einer Höhe und einer Temperatur einer Referenzschicht (z.B. der 100 hPa Isobaren) der Erdatmosphäre, Weltraumwetterdaten zur Beschreibung wenigstens eines Parameters des Weltraumwetters (z.B. Sonnenaktivität, Anzahl von Sonnenflecken, Intensität des Sonnenwindes, Intensität primärer kosmischer Strahlung in oberen Schichten der Erdatmosphäre), Sonnendaten zur Beschreibung der Sonnenaktivität, Sonnendaten zur Beschreibung einer Intensität des Sonnenwinds, Satellitendaten zur Beschreibung wenigstens eines Parameters des Weltraumwetters (z.B. Anzahl der Sonnenflecken, Kp-Index), Kalenderdaten zur Beschreibung eines Zeitpunktes innerhalb eines Sonnenzyklus, geographische Daten zur Beschreibung geographischer Koordinaten des Orts der Messvorrichtung, magnetosphärische Daten zur Beschreibung wenigstens eines Parameters der Magnetosphäre der Erde, und Messdaten wenigstens eines entfernt von der Messvorrichtung angeordneten Detektors zur Detektion von Teilchen sekundärer kosmischer Strahlung. Wie voranstehend erläutert, kann die Detektorzählrate durch einen oder mehrere solche Einflüsse beeinflusst sein. Basierend auf den Messdaten, welche einen oder mehrere solche Einflüsse beschreiben und/oder mit diesen in Zusammenhang stehen, kann die Detektorzählrate auf einen oder mehrere dieser Einflüsse korrigiert werden, wodurch insgesamt eine Messgenauigkeit gesteigert werden kann.

Die Messdaten und/oder zumindest ein Teil davon kann von der Messvorrichtung selbst erfasst werden. Alternativ oder zusätzlich können die Messdaten und/oder zumindest ein Teil davon beispielsweise über ein Kommunikationsmodul der Messvorrichtung und/oder über eine Fernabfrage empfangen und/oder abgefragt werden.

Gemäß einer Ausführungsform umfassen die Messdaten Luftdruckdaten eines erdatmosphärischen Luftdrucks am Ort der Messvorrichtung. Alternativ oder zusätzlich umfasst der wenigstens eine Einfluss eine Abschirmung der Teilchen sekundärer kosmischer Strahlung durch die Erdatmosphäre, insbesondere durch bodennahe Schichten der Erdatmosphäre. Aufgrund der Abschirmung der Teilchen durch die Erdatmosphäre können Änderungen des Luftdrucks am Ort der Messvorrichtung die Detektorzählrate beeinflussen. Der Luftdruck kann dabei als Maß für die Masse der Erdatmosphäre über dem Detektor dienen. Basierend auf dem Luftdruck kann daher die Detektorzählrate mit hoher Präzision auf den Einfluss der Erdatmosphäre korrigiert werden.

Gemäß einer Ausführungsform weist die Messvorrichtung ferner einen Drucksensor auf, welcher mit der Auswerteeinheit gekoppelt ist und welcher dazu eingerichtet ist, Luftdruckdaten des erdatmosphärischen Luftdrucks am Ort der Messvorrichtung zu ermitteln, wobei die Messdaten die mit dem Drucksensor ermittelten Luftdruckdaten umfassen. Die Auswerteeinheit kann daher dazu eingerichtet sein, die korrigierte Zählrate basierend auf der Detektorzählrate und basierend auf den Luftdruckdaten des Drucksensors zu bestimmen.

Gemäß einer Ausführungsform ist die Auswerteeinheit dazu eingerichtet, die korrigierte Zählrate basierend auf einem exponentiellen Zusammenhang zwischen der Detektorzählrate und dem Luftdruck zu ermitteln.

Eine Änderung der Detektorzählrate $dN$ in Abhängigkeit einer Änderung des Luftdrucks $dp$ kann beispielsweise über folgende Differentialgleichung gegeben sein:

$$dN = -\alpha dp,$$

wobei a der sogenannte barometrische Koeffizient (z.B. in Einheiten von %/mbar), der die Abschirmung durch die Erdatmosphäre beschreibt, $N$ die Detektorzählrate und $p$ der Luftdruck am Ort der Messvorrichtung sind. Der Zusammenhang zwischen korrigierter Zählrate $N_{kor}$ und der Detektorzählrate $N$ kann daher über folgende Gleichung beschrieben werden:

$$N_{kor} = N \cdot e^{-\alpha(p_0 - p)},$$

wobei $p_0$ ein Referenzdruck ist, der beliebig gewählt werden kann.

Die Auswerteeinheit kann daher dazu eingerichtet sein, aus den Luftdruckdaten einen oder mehrere Luftdruckwerte zu bestimmen (und/oder abzuleiten) und basierend auf voranstehender Gleichung die korrigierte Zählrate zu berechnen. Der barometrische Koeffizient kann hierbei vorbestimmt sein und/oder beispielsweise durch eine Kalibriermessung bestimmt werden.

Voranstehende Gleichung stellt jedoch nur eine Möglichkeit der Korrektur der Detektorzählrate auf den Luftdruck dar. Nachfolgend werden Aspekte der Messvorrichtung und/oder der Erfindung zusammengefasst sowie weitere Möglichkeiten der Ermittlung der korrigierten Zählrate beschrieben.

Da die am Erdboden detektierte Flussrate von Teilchen der sekundären kosmischen Strahlung, insbesondere Myonen, zum einen über den Jahresverlauf beispielsweise aufgrund von Änderungen des (bodennahen) Luftdrucks, Änderungen der Höhe und Temperatur einer Referenzluftschicht, welche etwa dem Ort der maximalen Myonen-Produktionsrate entsprechen kann (der wiederum der 100 hPa Isobaren in der Erdatmosphäre entsprechen kann) schwankt, zum anderen aufgrund weiterer Faktoren, wie etwa der Sonnenaktivität, dem Zustand der Magnetosphäre und/oder dem Weltraumwetter, welche Einfluss auf die Teilchenflussrate der auf die obere Atmosphäre treffenden primären kosmischen Strahlung haben, beeinflusst wird, ist erfindungsgemäß vorgesehen, die Detektorzählrate auf einen oder mehrere dieser Einflüsse zu korrigieren, insbesondere um den Messfehler zu minimieren.

Zur Korrektur dieser Einflüsse kann beispielsweise eine lokal gemessene Referenz-Zählrate eines Referenzdetektors benutzt werden, welche nicht durch das zu messende Medium oder andere an der Messstelle zeitlich variable Einflüsse beeinflusst wird. Auch kann die am Ort der Messvorrichtung durch das zu messende Medium beeinflusste Detektorzählrate anhand lokal gemessener und/oder abgefragter Wetterdaten korrigiert werden. Die relative Variation der zur Bestimmung des Füllstandes des Mediums gemessenen Flussrate $I$, etwa der Myonen-Flussrate $I$, kann beispielsweise gemäß der Methode von Duperier

$$\frac{\Delta I}{I} = \alpha \Delta p + [\beta \Delta H + \gamma \Delta T]$$

korrigiert werden, wobei $\alpha$ der partielle Druckkoeffizient (etwa in Einheiten von %/hPa), $\Delta p$ die Änderung des lokal gemessenen Luftdrucks gegenüber dem Langzeitmittel, $\beta$ der Höhenkoeffizient (etwa in Einheiten von %/km), $\gamma$ der positive Temperaturkoeffizient (etwa in Einheiten von %/K) und $\Delta H$ und $\Delta T$ die Änderung der Höhe und Temperatur der Referenzschicht (etwa der 100 hPa Isobare) sind. $\Delta I$ ist die Änderung der Flussrate, etwa der Myonen-Flussrate, gegenüber dem jährlichen Durchschnitt. Entsprechend kann auch die Detektorzählrate einem solchen funktionalen Zusammenhang gehorchen. Es mag ausreichend sein, nur kurzzeitige Veränderungen der Flussrate, wie beispielsweise Veränderungen aufgrund des Einflusses des an der Messvorrichtung lokal gemessenen bodennahen Luftdrucks, zu korrigieren und langsame und/oder langperiodische Einflüsse über den Jahresverlauf, wie etwa die Temperatur und Höhe der Referenzschicht, zu vernachlässigen. Die beiden letzten Terme in obiger Gleichung können in diesem Fall vernachlässigt werden und sind daher in eckige Klammern gesetzt.

Langsame und/oder langperiodische Einflüsse über den Jahresverlauf, wie die Temperatur und Höhe der Referenzschicht, eine Änderung der Sonnenaktivität und/oder eine Änderung des Zustandes der Magnetosphäre können beispielsweise über einen oder mehrere vorbestimmte Parameter entsprechend dem aktuellen Datum korrigiert werden.

Alternativ oder zusätzlich kann die Variation der Flussrate der Teilchen sekundärer kosmischer Strahlung, etwa der Myonenflussrate, und/oder die Detektorzählrate anhand der sogenannten effektiven atmosphärischen Temperatur $T_{eff}$ korrigiert werden:

$$\frac{\Delta I}{I} = \alpha_T \frac{\Delta T_{\mathrm{eff}}}{T_{\mathrm{eff}}}$$

Die effektive atmosphärische Temperatur berücksichtigt dabei den Einfluss aller atmosphärischen Schichten (etwa mit zugehörigem Druck und/oder zugehöriger Temperatur) auf die Flussrate sekundärer Teilchen mit einem oder mehreren Gewichtungsfaktoren, insbesondere $\alpha_T$. Messdaten bezüglich der effektiven atmosphärischen Temperatur und/oder Messdaten, aus welchen sich diese ableiten lässt, können beispielsweise über ein Kommunikationsmodul der Messvorrichtung empfangen und/oder abgefragt werden. Auch kann die Messvorrichtung solche Messdaten zumindest teilweise selbst ermitteln.

Die Auswerteeinheit kann daher dazu eingerichtet sein, die Messdaten zu verarbeiten und/oder einen oder mehrere Parameter einer oder mehrerer der voranstehend erläuterten Gleichungen zu bestimmen. Auf diese Weise kann die Auswerteeinheit basierend auf einer Anwendung einer oder mehrerer der voranstehenden Gleichungen die korrigierte Zählrate ermitteln.

Gemäß einer Ausführungsform weist die Messvorrichtung ferner einen Zeitgeber, etwa eine Echtzeituhr mit Kalendarium, zur Ermittlung von Kalenderdaten und/oder eines Datums auf, wobei die Messdaten die mit dem Zeitgeber erfassten Kalenderdaten umfassen. Die Auswerteeinheit ist ferner dazu eingerichtet, die Detektorzählrate basierend auf den Kalenderdaten und/oder basierend auf wenigstens einem Datum hinsichtlich eines Einflusses der Sonnenaktivität auf die Flussrate der Teilchen sekundärer kosmischer Strahlung am Ort der Messvorrichtung zu korrigieren. Über die Kalenderdaten und/oder das Datum kann etwa ein Zeitpunkt innerhalb des Sonnenzyklus ermittelt werden. Dies kann eine Bestimmung und/oder Abschätzung der Sonnenaktivität zu diesem Zeitpunkt bzw. dem Datum erlauben.

Auch ein oder mehrere weitere vorbestimmte Parameter können zur Bestimmung der Sonnenaktivität herangezogen werden. Beispielsweise kann die Sonnenaktivität unter Annahme eines quasi-periodischen und/oder sinus-förmigen Verlaufs mit einer Periodizität von rund elf Jahren approximiert werden. Auch die Flussrate am Ort der Messvorrichtung kann daher einer sinusförmigen Variation mit einer Periodizität von rund elf Jahren unterworfen sein. Gleichsam kann der wenigstens eine vorbestimmte Parameter eine Periodizität und/oder eine Amplitude des Sonnenzyklus bzw. der damit einhergehenden Variation der Flussrate sekundärer Teilchen am Ort der Messvorrichtung umfassen.

Gemäß einer Ausführungsform weist die Messvorrichtung ferner ein Kommunikationsmodul auf, welches dazu eingerichtet ist, zumindest einen Teil der Messdaten von wenigstens einer externen Sendestation zu empfangen, wobei die Auswerteeinheit dazu eingerichtet ist, die korrigierte Zählrate basierend auf der Detektorzählrate und basierend auf den über das Kommunikationsmodul empfangenen Messdaten zu ermitteln. Die Messvorrichtung kann daher zumindest einen Teil der zur Korrektur herangezogenen Messdaten von einer Sendestation abrufen. Dadurch kann der von der Messvorrichtung durchzuführende Messaufwand geringgehalten werden. Beispielsweise kann die Messvorrichtung Satellitendaten, etwa den Kp-Index, abrufen, welche die aktuelle Sonnenaktivität und/oder die aktuelle Intensität des Sonnenwindes beschreiben. Auch kann die Messvorrichtung Messdaten, welche eine aktuelle Anzahl von Sonnenflecken beschreiben, abrufen und daraus die aktuelle Sonnenaktivität ableiten. Auch können Messdaten eines Referenzdetektors und/oder Luftdruckdaten über das Kommunikationsmodul abgefragt und/oder empfangen werden. Gleichsam können Messdaten zur Beschreibung eines Zustandes der Magnetosphäre über das Kommunikationsmodul abgerufen werden.

Gemäß einer Ausführungsform ist das Kommunikationsmodul dazu eingerichtet, Luftdruckdaten eines erdatmosphärischen Luftdrucks am Ort der Messvorrichtung und/oder Wetterdaten zur Beschreibung wenigstens eines Parameters der Erdatmosphäre, etwa den Luftdruck, der Temperatur, der Höhe der 100 hPa Isobaren, der Temperatur der 100 hPa Isobaren, der effektiven Temperatur der Erdatmosphäre, zu empfangen. Hierdurch kann auf einen in der Messvorrichtung integrierten Drucksensor verzichtet werden und die Messvorrichtung kann kompakt ausgeführt werden. Die Messvorrichtung kann jedoch auch sowohl einen Drucksensor zur Erfassung von Luftdruckdaten aufweisen als auch Luftdruckdaten über das Kommunikationsmodul empfangen. Dies kann eine Genauigkeit der korrigierten Zählrate weiter steigern und/oder eine Plausibilitätskontrolle der Luftdruckdaten des Drucksensors der Messvorrichtung ermöglichen.

Gemäß einer Ausführungsform ist das Kommunikationsmodul dazu eingerichtet, Weltraumwetterdaten zur Beschreibung wenigstens eines Parameters des Weltraumwetters, z.B. der Sonnenaktivität, der Anzahl von Sonnenflecken, der Intensität des Sonnenwindes und/oder der Intensität primärer kosmischer Strahlung in oberen Schichten der Erdatmosphäre, zu empfangen. Die Auswerteeinheit kann etwa dazu eingerichtet sein, die korrigierte Zählrate basierend auf der Detektorzählrate und basierend auf den Weltraumwetterdaten zu ermitteln. Auch kann die Auswerteeinheit dazu eingerichtet sein, basierend auf einer Verarbeitung der Weltraumwetterdaten wenigstens einen Korrekturfaktor und/oder Korrekturparameter für die Detektorzählrate zu bestimmen. Beispielsweise können die Weltraumwetterdaten Satellitendaten, etwa der Kp-Index, und/oder eine Anzahl von Sonnenflecken sein. Die Auswerteeinheit kann aus derartigen Messdaten bzw. Weltraumwetterdaten wenigstens einen Korrekturfaktor und/oder Korrekturparameter ableiten und die Detektorzählrate basierend auf dem wenigstens einen Korrekturfaktor und/oder Korrekturparameter korrigieren, um die korrigierte Zählrate zu bestimmen.

Gemäß einer Ausführungsform ist das Kommunikationsmodul dazu eingerichtet, Messdaten wenigstens eines entfernt von der Messvorrichtung angeordneten Detektors zur Detektion von Teilchen sekundärer kosmischer Strahlung zu empfangen. Die Auswerteeinheit kann dazu eingerichtet sein, die korrigierte Zählrate basierend auf der Detektorzählrate und basierend auf den Messdaten des entfernt von der Messvorrichtung angeordneten Detektors zu ermitteln. Durch Verwendung dieser Messdaten kann die Messvorrichtung Einflüsse auf die Flussrate am Ort der Messvorrichtung korrigieren. Optional kann die Messvorrichtung bzw. die Auswerteeinheit dazu eingerichtet sein, die Messdaten des entfernt von der Messvorrichtung angeordneten Detektors zu korrigieren, beispielsweise hinsichtlich eines Luftdruckes, einer Höhe über dem Erdboden und/oder hinsichtlich einer geographischen Position des entfernt von der Messvorrichtung angeordneten Detektors.

Gemäß einer Ausführungsform weist der Detektor wenigstens zwei separate Szintillationszähler auf, wobei der Detektor dazu eingerichtet ist, die Detektorzählrate basierend auf einer Koinzidenz von Messereignissen in den wenigstens zwei Szintillationszählern zu ermitteln. Jeder der Szintillationszähler kann beispielsweise einen Szintillator und einen Photonenvervielfacher (bzw. Photoelektronenvervielfacher) aufweisen. Als Szintillatormaterial kann jedes geeignete Material verwendet werden. Die Szintillatoren können daher organische Szintillatoren, anorganische Szintillatoren, Polystyol-Szintillatoren und/oder flüssige Szintillatoren sein. Die Verwendung zweier Szintillationszähler kann in vorteilhafter Weise eine Richtungsselektivität des Detektors basierend auf einer Koinzidenzmessung mit den Szintillationszählern bereitstellen. Dadurch kann erreicht werden, dass der Detektor vornehmlich Teilchen detektiert, welche das Medium zumindest teilweise durchquert haben. Eine Richtungsselektivität des Detektors kann jedoch auch durch andere Mittel bereitgestellt werden, etwa eine geeignete Abschirmung.

Allgemein kann die Anzahl der auf den Detektor einfallenden Teilchen, etwa Myonen, beispielsweise mittels eines Szintillationszählers ermittelt werden. Dieser erzeugt beim Durchgang eines elektrisch geladenen Teilchens, wie beispielsweise einem Myon, und/oder bei Absorption eines hochenergetischen Photons eine gewisse Anzahl an Lichtquanten, welche mittels eines Photoelektronenvervielfachers in ein elektrisches Signal umgewandelt werden kann. Nutzt man die Koinzidenz von Ereignissen in einem Detektor mit baulich und örtlich getrennten Szintillationszählern, d.h. wenigstens zwei separaten Szintillationszählern, so kann die Trajektorie des einfallenden Teilchens, etwa eines Myons, auf den Akzeptanzwinkel des Detektors eingeschränkt werden. Wird ein solcher, richtungsauflösender Detektor beispielsweise unterhalb eines Behälters befestigt, in welchem sich das Medium befindet, kann somit die durch das zu messende Medium beeinflusste Detektorzählrate bestimmt werden. Aufgrund des Zerfalls von niederenergetischen Myonen im Medium, verändert sich die Detektorzählrate in dem entsprechenden Raumwinkel und/oder Akzeptanzwinkel in Abhängigkeit des Füllstandes des Mediums. Somit kann eine präzise Bestimmung des Füllstandes des Mediums ermöglicht werden.

Die erfindungsgemäße Messvorrichtung kann somit zur Bestimmung des Füllstandes eines Mediums in einem Behälter verwendet werden. Der Akzeptanzwinkel des Detektors kann hierbei zumindest teilweise mit dem Behälter und/oder dem Medium überlappen, so dass der Detektor Teilchen detektiert, welche das Medium und/oder den Behälter zumindest teilweise durchquert haben. Die Messvorrichtung kann jedoch auch zur Bestimmung eines Füllstandes eines Mediums, etwa von Wasser und/oder von Sediment, in einem See, einem Fluss und/oder einem Stausee verwendet werden.

Ein weiterer Aspekt der vorliegenden Offenbarung betrifft die Verwendung der Messvorrichtung, so wie voranstehend und nachfolgend beschrieben, als Grenzstandmessgerät zur Bestimmung eines Grenzstandes des Mediums.

Ein weiterer Aspekt der vorliegenden Offenbarung betrifft ein Verfahren zur Bestimmung eines Füllstandes eines Mediums mit einer Messvorrichtung, so wie voranstehend und nachfolgend beschrieben. Das Verfahren weist dabei die folgenden Schritte auf:

- Ermitteln, mit einem richtungsselektiven Detektor der Messvorrichtung, einer Detektorzählrate, welche mit einer Flussrate von Teilchen der sekundären kosmischen Strahlung nach zumindest teilweisem Durchtritt durch das Medium korreliert;
- Korrigieren, mit einer Auswerteeinheit der Messvorrichtung, der Detektorzählrate basierend auf Messdaten, welche mit wenigstens einem Einfluss auf die Flussrate der Teilchen sekundärer kosmischer Strahlung am Ort der Messvorrichtung in Zusammenhang stehen, unter Ermitteln einer auf den wenigstens einen Einfluss korrigierten Zählrate; und
- Bestimmen des Füllstandes des Mediums basierend auf der korrigierten Zählrate.

Gemäß einem weiteren Aspekt ist ein Programmelement angegeben, das, wenn es auf einem Prozessor einer Messvorrichtung und/oder der Auswerteeinheit ausgeführt wird, die Messvorrichtung anleitet, einen Füllstand eines Mediums gemäß dem voranstehend erläuterten Verfahren zu ermitteln.

Dabei kann das Programmelement z. B. Teil einer Software sein, die auf dem Prozessor und/oder in einem Datenspeicher der Messvorrichtung gespeichert ist. Der Prozessor kann dabei ebenso Gegenstand der Erfindung sein und/oder beispielsweise in der Auswerteeinheit integriert sein.

Gemäß einem weiteren Aspekt ist ein computerlesbares Medium angegeben, auf dem ein Programmelement gespeichert ist, das, wenn es auf einem Prozessor einer Messvorrichtung und/oder der Auswerteeinheit ausgeführt wird, die Messvorrichtung anleitet, einen Füllstand eines Mediums gemäß dem voranstehend erläuterten Verfahren zu ermitteln.

Im Folgenden werden Ausführungsformen mit Verweis auf die beigefügten Figuren beschrieben.

Kurze Beschreibung der Figuren

Die Figuren sind lediglich schematisch und nicht maßstabsgetreu. Sind in der nachfolgenden Beschreibung in verschiedenen Figuren die gleichen Bezugszeichen angegeben, so bezeichnen diese gleiche, gleich wirkende, ähnliche oder ähnlich wirkende Elemente.

Fig. 1 zeigt eine Messvorrichtung zur Füllstandsmessung gemäß einem Ausführungsbeispiel.

Fig. 2 illustriert exemplarische Zählraten der Messvorrichtung aus Figur 1.

Fig. 3 zeigt ein Flussdiagramm zur Illustration von Schritten eines Verfahrens zur Bestimmung eines Füllstandes gemäß einem Ausführungsbeispiel.

Detaillierte Beschreibung von Ausführungsbeispielen

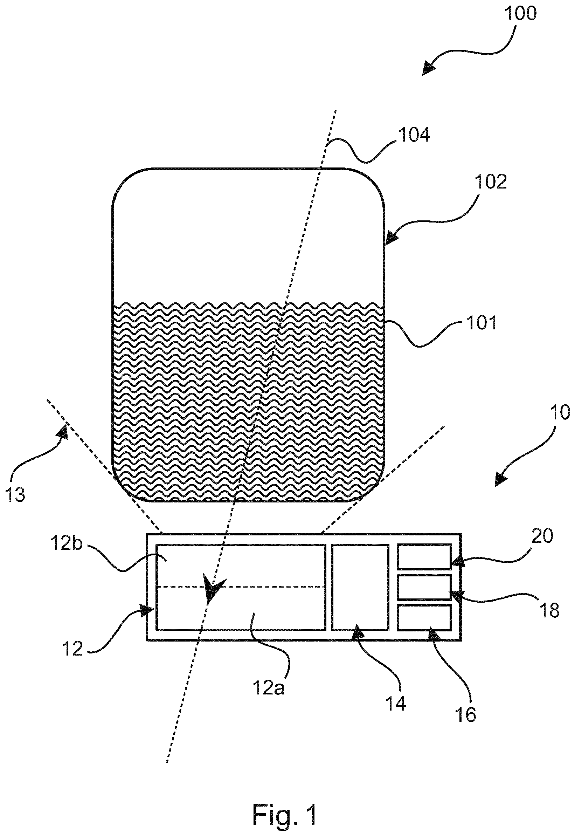

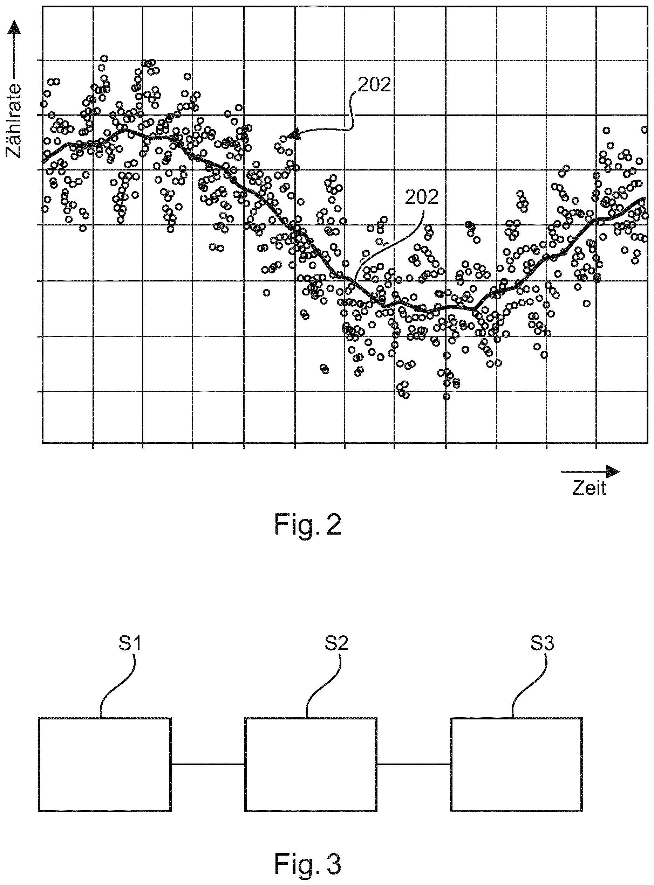

Figur 1 zeigt eine Messvorrichtung 10 zur Füllstandmessung gemäß einem Ausführungsbeispiel. Figur 2 illustriert exemplarische Zählraten der Messvorrichtung 10 aus Figur 1, insbesondere eine Detektorzählrate und eine korrigierte Zählrate als Funktion der Zeit.

Im Speziellen zeigt Figur 1 eine Messvorrichtung 10 zur Bestimmung eines Füllstandes eines Mediums 101 in einem Behälter 102. Das Medium 101 kann etwa eine Flüssigkeit und/oder ein Feststoff sein. Die in Figur 1 gezeigte Messvorrichtung 10 mit dem Behälter 102 kann eine Myonen-Messvorrichtung 10 und/oder eine Messanordnung 100 gemäß einem Ausführungsbeispiel bezeichnen.

Die Messvorrichtung 10 weist einen richtungsselektiven und/oder richtungsauflösenden Detektor 12 auf. Beispielhaft weist der Detektor 12 zwei separate, etwa baulich und/oder örtlich getrennte, Szintillationszähler 12a, 12b auf. Gleichsam weist der Detektor 12 ein Paar von Szintillationszählern 12a, 12b auf. Jeder der Szintillationszähler 12a, 12b kann beispielsweise einen Szintillator und/oder einen Photonenvervielfacher (bzw. Photoelektronenvervielfacher) aufweisen. Alternativ können aber auch Avalanche-Photodioden (APD) und daraus abgeleitete Silicon Photomultiplier (SiPM) eingesetzt werden. Als Szintillatormaterial kann jedes geeignete Material verwendet werden. Die Szintillatoren können daher organische Szintillatoren, anorganische Szintillatoren, Polystyol-Szintillatoren und/oder flüssige Szintillatoren sein.

Die Verwendung wenigstens zweier Szintillationszähler 12a, 12b bzw. eines Paars von Szintillationszählern 12a, 12b kann in vorteilhafter Weise eine Richtungsselektivität des Detektors 12, etwa basierend auf einer Koinzidenzmessung mit den Szintillationszählern 12a, 12b, bereitstellen. Hierzu kann der Detektor 12 etwa über eine Koinzidenzeinheit (nicht dargestellt) verfügen und/oder dazu eingerichtet sein, nur in den beiden Szintillationszählern 12a, 12b koinzidente Ereignisse und/oder Messereignisse zu zählen. Dies kann zur Folge haben, dass eine Sensitivität des Detektors 12 auf einen gewissen Raumwinkelbereich 13 und/oder einen gewissen Akzeptanzwinkel 13 eingeschränkt ist.

Der Akzeptanzwinkel 13 kann alternativ oder zusätzlich durch Größe, Bauform, sowie relative Lage bzw. Abstand der beiden Szintillationszähler entsprechend beeinflusst werden. Es mag auch möglich sein, dass der Akzeptanzwinkel 13 an den zu messenden Behälter 102 anpassbar ist.

Wie in Figur 1 illustriert, ist der Detektor 12 dabei derart relativ zu dem Behälter 102 und/oder dem Medium 101 angeordnet, dass der Akzeptanzwinkel 13 des Detektors 12 zumindest teilweise mit dem Medium 101 (bzw. Behälter 102) überlappt. Mit anderen Worten ist der Detektor 12 derart angeordnet, dass das Medium 101 und/oder der Behälter 102 zumindest teilweise in dem Akzeptanzwinkel 13 des Detektors 12 liegt. In dem Beispiel der Figur 1 ist der Detektor 12 daher zumindest teilweise unterhalb des Behälters 102 und/oder unterhalb des Mediums 101 angeordnet. Andere Anordnungen sind jedoch gleichsam möglich.

Der Detektor 12 ist dazu eingerichtet, zumindest vornehmlich Teilchen der sekundären kosmischen Strahlung detektieren, welche das Medium 101 und/oder den Behälter 102 zumindest teilweise durchquert haben. In Figur 1 ist exemplarisch eine Trajektorie 104 eines Myons der sekundären kosmischen Strahlung illustriert. Entsprechend kann es sich bei dem Detektor 12 um einen Myonen-Detektor 12 handeln. Es können jedoch auch andere Teilchen der sekundären kosmischen Strahlung zur Füllstandmessung detektiert werden. In der nachfolgenden Beschreibung wird jedoch rein exemplarisch auf die Messung von Myonen Bezug genommen.

Da die von dem Detektor 12 detektierten Myonen das Medium 101 und/oder den Behälter 102 zumindest teilweise durchquert haben, kann die durch das zu messende Medium 101 beeinflusste Detektorzählrate bestimmt werden. Aufgrund des Zerfalls von niederenergetischen Myonen im Medium 101 und/oder Ionisation, verändert sich die Detektorzählrate in Abhängigkeit des Füllstandes des Mediums 101. Somit kann eine präzise Bestimmung des Füllstandes des Mediums 101 ermöglicht werden.

Auf den Detektor 12 und/oder die Szintillationszähler 12a, 12b treffende Myonen erzeugen aufgrund von Ionisierungen und/oder Zerfallsprozessen in den jeweiligen Szintillatoren Lichtpulse, welche mit den entsprechenden Photoelektronenvervielfachern in elektrische Signale gewandelt werden. Alternativ können aber auch Avalanche-Photodioden (APD) und/oder (z.B. daraus abgeleitete) Silicon Photomultiplier (SiPM) eingesetzt werden. In den beiden Szintillationszählern 12a, 12b koinzidente Signale werden von dem Detektor 12, etwa unter Verwendung der Koinzidenzeinheit, als Ereignis und/oder Messereignis gezählt. Der Detektor 12 bestimmt die Anzahl solcher Ereignisse pro Zeiteinheit und ermittelt so die Detektorzählrate 200, welche mit einer Flussrate der Myonen am Ort der Messvorrichtung 10 korreliert, für die Flussrate repräsentativ ist und/oder für diese Flussrate indikativ ist. Die Flussrate kann hierbei etwa einen Fluss, eine Intensität und/oder eine Fluenzrate (etwa in Einheiten von Teilchen pro Flächen- und Zeiteinheit) unterhalb des Behälter 102, am Ort der Messvorrichtung 10 und/oder am Ort des Detektors 12 bezeichnen.

Eine beispielhafte Detektorzählrate 200 des Detektors 12 aus Figur 1 ist in Figur 2 dargestellt. Figur 2 zeigt dabei die Detektorzählrate 200 in beliebigen Einheiten als Funktion der Zeit. Die Zeit-Achse der Figur 2 hat dabei ebenso beliebige Einheiten. Beispielsweise können die in Figur 2 gezeigten Zeitintervalle jeweils einer Zeitperiode von einem Monat entsprechen.

Wie in Figur 2 deutlich erkennbar ist, ist die Detektorzählrate 200 erheblichen Variationen unterworfen. Diese Variationen sind zum Teil auf Änderungen des Füllstandes des Mediums 101 zurückzuführen. Zum anderen sind diese Variationen jedoch auf einen oder mehrere weitere Einflüsse auf die Flussrate der Myonen zurückzuführen, wie etwa Variationen in Wetterbedingungen, erdatmosphärischen Variationen, insbesondere Variationen des Luftdrucks am Ort der Messvorrichtung 10, Variationen im Weltraumwetter, Variationen in der Sonnenaktivität und/oder Variationen eines Zustandes der Magnetosphäre der Erde. Derartige Variationen der Flussrate und/oder Einflüsse auf die Flussrate, welche nicht von Änderungen des Füllstandes des Mediums 101 hervorgerufen sind, können die Bestimmung des Füllstandes beeinflussen und/oder zu einer erhöhten Messungenauigkeit führen.

Um einen oder mehrere solcher Einflüsse auf die Flussrate und damit auf die Detektorzählrate 200 zu korrigieren, verfügt die Messvorrichtung 10 über eine Auswerteeinheit 14, die dazu eingerichtet ist, eine auf einen oder mehrere dieser Einflüsse korrigierte Zählrate 202 zu bestimmen. Damit kann die Messgenauigkeit gesteigert werden. Auch kann dadurch auf einen Referenzdetektor, welcher etwa oberhalb des Behälters 102 am Ort der Messvorrichtung 10 angeordnet werden könnte, verzichtet werden.

Zur Korrektur eines oder mehrerer der voranstehend erläuterten Einflüsse, welche nicht durch Änderungen des Füllstandes hervorgerufen sind, ist die Auswerteeinheit 14 dazu eingerichtet, Messdaten zu verarbeiten, welche mit einem oder mehreren dieser Einflüsse in Zusammenhang stehen. Beispielsweise kann die Auswerteeinheit 14 von den Messdaten einen oder mehrere Korrekturfaktoren und/oder Korrekturparameter ableiten und/oder basierend auf den Messdaten einen oder mehrere Korrekturfaktoren und/oder Korrekturparameter ermitteln. Unter Verrechnung des einen oder der mehreren Korrekturfaktoren und/oder Korrekturparameter mit der Detektorzählrate 200 kann die Auswerteeinheit 14 die korrigiert Zählrate 202 bestimmen. Basierend auf der korrigierten Zählrate 202 kann die Auswerteeinheit 14 sodann den Füllstand des Mediums 101 mit hoher Präzision bestimmen.

Allgemein können die Messdaten wenigstens ein Element ausgewählt aus der Gruppe bestehend aus Wetterdaten zur Beschreibung wenigstens eines Parameters der Erdatmosphäre, Luftdruckdaten eines erdatmosphärischen Luftdrucks, Temperaturdaten zur Beschreibung einer Temperatur der Erdatmosphäre, Wetterdaten zur Beschreibung einer effektiven Temperatur der Erdatmosphäre, Wetterdaten zur Beschreibung einer Höhe und einer Temperatur einer Referenzschicht der Erdatmosphäre, Weltraumwetterdaten zur Beschreibung wenigstens eines Parameters des Weltraumwetters, Sonnendaten zur Beschreibung der Sonnenaktivität, Sonnendaten zur Beschreibung einer Intensität des Sonnenwinds, Satellitendaten zur Beschreibung wenigstens eines Parameters des Weltraumwetters, Kalenderdaten zur Beschreibung eines Zeitpunktes innerhalb eines Sonnenzyklus, geographische Daten zur Beschreibung geographischer Koordinaten des Orts der Messvorrichtung, magnetosphärische Daten zur Beschreibung wenigstens eines Parameters der Magnetosphäre der Erde, und Messdaten wenigstens eines entfernt von der Messvorrichtung angeordneten Detektors zur Detektion von Teilchen sekundärer kosmischer Strahlung umfassen.

Eines oder mehrere Elemente der voranstehend genannten Messdaten kann die Messvorrichtung 10 entweder selbst ermitteln und/oder beispielsweise über eine Fernabfrage von einem Sender empfangen, etwa über ein Kommunikationsmodul 18, wie nachfolgend erläutert wird.

Beispielsweise kann die Messvorrichtung 10 einen Drucksensor 16 aufweisen, welcher mit der Auswerteeinheit 14 gekoppelt ist und dazu eingerichtet ist, Luftdruckdaten des erdatmosphärischen Luftdrucks am Ort der Messvorrichtung 10 zu ermitteln. Die Luftdruckdaten des Drucksensors 16 können sodann als Messdaten von der Auswerteeinheit 14 verarbeitet werden und basierend auf den Luftdruckdaten sowie der Detektorzählrate 200 kann die korrigierte Zählrate 202 bestimmt werden. Die korrigierte Zählrate 202 kann beispielsweise basierend auf einem exponentiellen Zusammenhang zwischen der Detektorzählrate 200 und dem Luftdruck ermittelt werden, wobei ein Zusammenhang zwischen korrigierter Zählrate $N_{kor}$ bzw. 202 und der Detektorzählrate $N$ bzw. 200 beispielsweise über folgende Gleichung beschrieben werden kann:

$$N_{kor} = N \cdot e^{-\alpha(p_0 - p)},$$

wobei $p_0$ ein Referenzdruck und $p$ ein Luftdruckwert ist.

Die Auswerteeinheit 14 kann daher dazu eingerichtet sein, aus den Luftdruckdaten des Drucksensors 16 einen oder mehrere Luftdruckwerte *p* zu bestimmen und basierend auf voranstehender Gleichung die korrigierte Zählrate 202 zu berechnen. Der barometrische Koeffizient $\alpha$ kann hierbei vorbestimmt sein und/oder beispielsweise durch eine Kalibriermessung bestimmt werden.

Alternativ oder zusätzlich zu dem Drucksensor 16 kann die Messvorrichtung 10 ein Kommunikationsmodul 18 aufweisen, welches zum Empfang und/oder zur Abfrage von Messdaten dienen kann. Beispielsweise können über das Kommunikationsmodul 18 Luftdruckdaten des Luftdrucks am Ort der Messvorrichtung 10 etwa von einer Wetterstation abgefragt und/oder empfangen werden. In diesem Fall kann auf den Drucksensor 16 verzichtet werden, jedoch können auch sowohl Luftdruckdaten über den Drucksensor 16 ermittelt als auch Luftdruckdaten über das Kommunikationsmodul 18 empfangen werden.

Allgemein können beliebige Messdaten, welche mit einem oder mehreren Einflüssen auf die Flussrate der Myonen am Ort der Messvorrichtung 10 in Zusammenhang stehen (wie voranstehend erläutert), über das Kommunikationsmodul 18 empfangen werden. Insbesondere können über das Kommunikationsmodul 18 erdatmosphärische Messdaten, wie beispielsweise eine effektive atmosphärische Temperatur, Luftdruckdaten, eine Höhe der 100 hPa Isobaren und/oder eine Temperatur der 100 hPa Isobaren, empfangen werden, aus welchen die Auswerteeinheit 14 einen oder mehrere Korrekturfaktoren und/oder Korrekturparameter zur Ermittlung der korrigierten Zählrate 202 ableiten kann. Alternativ oder zusätzlich können über das Kommunikationsmodul 18 Messdaten zum Weltraumwetter, etwa Messdaten zur Sonnenaktivität, Satellitendaten zur Sonnenaktivität, Messdaten bezüglich einer Anzahl von Sonnenflecken und/oder Messdaten bezüglich einer Intensität des Sonnenwindes, empfangen werden. Alternativ oder zusätzlich können Messdaten bezüglich eines Zustandes der Magnetosphäre, etwa Messdaten bezüglich einer Magnetfeldstärke, Messdaten bezüglich einer räumlichen Ausdehnung der Magnetosphäre und/oder Messdaten bezüglich einer Position der Pole des Erdmagnetfelds, über das Kommunikationsmodul 18 empfangen werden. Auch aus solchen Messdaten kann die Auswerteeinheit 14 geeignete Korrekturfaktoren und/oder Korrekturparameter ableiten und zur Ermittlung der korrigierten Zählrate 202 verwenden.

Um beispielsweise langperiodische Schwankungen der Flussrate der Myonen, etwa bedingt durch den Sonnenzyklus, zu korrigieren, können über das Kommunikationsmodul 18 auch Kalenderdaten empfangen werden. Die Auswerteeinheit 14 kann beispielsweise basierend auf einem oder mehreren vorbestimmten Parametern, welche etwa in einem Datenspeicher der Messvorrichtung 10 hinterlegt sein können und/oder über das Kommunikationsmodul 18 empfangen werden können, und basierend auf den Kalenderdaten einen oder mehrere Korrekturfaktoren und/oder Korrekturparameter bestimmen. Derartige Parameter können beispielsweise eine Amplitude und/oder eine Periodizität sein, welche Änderungen der Flussrate aufgrund des Sonnenzyklus am Ort der Messvorrichtung 10 beschreiben.

Alternativ oder zusätzlich kann die Messvorrichtung 10 über einen Zeitgeber 20, etwa eine Echtzeituhr mit Kalendarium, verfügen. Dies erlaubt, dass die Messvorrichtung selbst die Kalenderdaten über den Zeitgeber 20 bestimmen kann.

Optional, d.h. alternativ oder in Ergänzung, kann die Messvorrichtung 10 über das Kommunikationsmodul 18 auch Messdaten wenigstens eines entfernt von der Messvorrichtung 10 angeordneten Detektors, d.h. einem Detektor an einer anderen geographischen Position, welcher Teilchen der sekundären kosmischen Strahlung misst, empfangen. Auch diese Messdaten können von der Auswerteeinheit 14 verwendet werden, um die korrigierte Zählrate 202 zu bestimmen. Die Auswerteeinheit 14 kann hierzu Roh-Messdaten des entfernten Detektors verwenden oder die Roh-Messdaten verarbeiten, beispielsweise auf die geographische Position der Messvorrichtung 10 umrechnen und/oder etwa eine Luftdruckkorrektur vornehmen der Roh-Messdaten vornehmen.

Die Messvorrichtung 10 der Figuren 1 und 2 kann auch als Grenzstandmessgerät 10 zur Ermittlung eines Grenzstandes des Mediums 101 verwendet werden.

Auch kann die voranstehend erläuterte Messvorrichtung zur Bestimmung eines Füllstandes eines Mediums verwendet werden, welches nicht in einem Behälter angeordnet. Beispiele hierfür sind die Bestimmung des Füllstandes eines Sees, eines Stausees, eines Flusses und/oder von Sedimenten.

Fig. 3 zeigt ein Flussdiagramm zur Illustration von Schritten eines Verfahrens zur Bestimmung eines Füllstandes eines Mediums 101 mit einer Messvorrichtung 10 gemäß einem Ausführungsbeispiel. Die Messvorrichtung 10 kann hierbei die mit Bezug auf Figuren 1 und 2 beschriebene Messvorrichtung 10 sein.

In einem Schritt S1 wird mit einem richtungsselektiven Detektor 12 der Messvorrichtung 10 eine Detektorzählrate 200, welche mit einer Flussrate von Teilchen der sekundären kosmischen Strahlung nach zumindest teilweisem Durchtritt durch das Medium 101 korreliert, ermittelt.

In einem weiteren Schritt S2 wird mit einer Auswerteeinheit 14 der Messvorrichtung 10 die Detektorzählrate 200 basierend auf Messdaten, welche mit wenigstens einem Einfluss auf die Flussrate der Teilchen sekundärer kosmischer Strahlung am Ort der Messvorrichtung 10 in Zusammenhang stehen, korrigiert. In Schritt S2 kann somit die auf den wenigstens einen Einfluss korrigierten Zählrate 202 ermittelt werden. Optional können in Schritt S2 die Messdaten gemessen werden, etwa mit dem Drucksensor 16 und/oder dem Zeitgeber 20. Alternativ oder zusätzlich können die Messdaten in Schritt S2 mit dem Kommunikationsmodul 18 empfangen werden.

Optional kann die Auswerteeinheit 14 in Schritt S2 einen oder mehrere Korrekturfaktoren und/oder Korrekturparameter aus den Messdaten ableiten und mit der Detektorzählrate 200 verrechnen, um die korrigierte Zählrate 200 zu bestimmen.

In einem weiteren Schritt S3 wird sodann mit der Auswerteeinheit 14 der Füllstand des Mediums 101 basierend auf der korrigierten Zählrate 202 bestimmt.

Ergänzend ist darauf hinzuweisen, dass "umfassend" und "aufweisen" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsformen beschrieben worden sind, auch in Kombination mit anderen Merkmalen oder Schritten anderer oben beschriebener Ausführungsformen verwendet werden können. Bezugszeichen in den Ansprüchen sind nicht als Einschränkung anzusehen.

**Patentansprüche**

1. Messvorrichtung (10), eingerichtet zur Bestimmung eines Füllstandes eines Mediums (101), die Messvorrichtung (10) aufweisend:

einen richtungsselektiven Detektor (12), welcher dazu eingerichtet ist, Teilchen der sekundären kosmischen Strahlung nach zumindest teilweisem Durchtritt durch das Medium (101) zu detektieren und eine mit einer Flussrate der Teilchen sekundärer kosmischer Strahlung am Ort der Messvorrichtung (10) korrelierende Detektorzählrate (200) zu ermitteln; und
eine Auswerteeinheit (14), die dazu eingerichtet ist:

- basierend auf der von dem Detektor (12) ermittelten Detektorzählrate (200) und basierend auf Messdaten, welche mit wenigstens einem Einfluss auf die Flussrate der Teilchen sekundärer kosmischer Strahlung am Ort der Messvorrichtung (10) in Zusammenhang stehen, eine auf den wenigstens einen Einfluss korrigierte Zählrate (202) zu ermitteln;
- basierend auf der korrigierten Zählrate (202) den Füllstand des Mediums (101) zu bestimmen, und

wobei die Messvorrichtung (10) einen einzigen richtungsselektiven Detektor (12) zur Detektion der Teilchen sekundärer kosmischer Strahlung, die Myonen, Elektronen, Positronen, Photonen, Pionen und/oder Neutronen sind, aufweist.

2. Messvorrichtung (10) nach Anspruch 1,

wobei der richtungsselektive Detektor (12) dazu eingerichtet ist, Myonen der sekundären kosmischen Strahlung zu detektieren; und/oder
wobei der richtungsselektive Detektor (12) dazu eingerichtet ist, eine mit einer Flussrate von sekundären kosmischen Myonen korrelierende Detektorzählrate (200) zu ermitteln.

3. Messvorrichtung (10) nach einem der voranstehenden Ansprüche, wobei die Messdaten wenigstens ein Element ausgewählt aus der Gruppe bestehend aus Wetterdaten zur Beschreibung wenigstens eines Parameters der Erdatmosphäre, Luftdruckdaten eines erdatmosphärischen Luftdrucks, Temperaturdaten zur Beschreibung einer Temperatur der Erdatmosphäre, Wetterdaten zur Beschreibung einer effektiven Temperatur der Erdatmosphäre, Wetterdaten zur Beschreibung einer Höhe und einer Temperatur einer Referenzschicht der Erdatmosphäre, Weltraumwetterdaten zur Beschreibung wenigstens eines Parameters des Weltraumwetters, Sonnendaten zur Beschreibung der Sonnenaktivität, Sonnendaten zur Beschreibung einer Intensität des Sonnenwinds, Satellitendaten zur Beschreibung wenigstens eines Parameters des Weltraumwetters, Kalenderdaten zur Beschreibung eines Zeitpunktes innerhalb eines Sonnenzyklus, geographische Daten zur Beschreibung geographischer Koordinaten des Orts der Messvorrichtung, magnetosphärische Daten zur Beschreibung wenigstens eines Parameters der Magnetosphäre der Erde, und Messdaten wenigstens eines entfernt von der Messvorrichtung angeordneten Detektors zur Detektion von Teilchen sekundärer kosmischer Strahlung umfassen.

4. Messvorrichtung (10) nach einem der voranstehenden Ansprüche,

wobei die Messdaten Luftdruckdaten eines erdatmosphärischen Luftdrucks am Ort der Messvorrichtung (10) umfassen; und/oder
wobei der wenigstens eine Einfluss eine Abschirmung der Teilchen sekundärer kosmischer Strahlung durch die Erdatmosphäre, insbesondere durch bodennahe Schichten der Erdatmosphäre, umfasst.

5. Messvorrichtung (10) nach einem der voranstehenden Ansprüche, ferner aufweisend:

einen Drucksensor (16), welcher mit der Auswerteeinheit (14) gekoppelt ist und welcher dazu eingerichtet ist, Luftdruckdaten des erdatmosphärischen Luftdrucks zu ermitteln; und
wobei die Messdaten die mit dem Drucksensor (16) ermittelten Luftdruckdaten umfassen.

**6.** Messvorrichtung (10) nach einem der Ansprüche 4 oder 5,
wobei die Auswerteeinheit (14) dazu eingerichtet ist, die korrigierte Zählrate (202) basierend auf einem exponentiellen Zusammenhang zwischen der Detektorzählrate (200) und dem Luftdruck zu ermitteln.

**7.** Messvorrichtung (10) nach einem der voranstehenden Ansprüche, ferner aufweisend:

einen Zeitgeber (20) zur Ermittlung von Kalenderdaten,
wobei die Messdaten die mit dem Zeitgeber (20) erfassten Kalenderdaten umfassen; und
wobei die Auswerteeinheit (14) dazu eingerichtet ist, die Detektorzählrate (200) basierend auf den Kalenderdaten hinsichtlich eines Einflusses der Sonnenaktivität auf die Flussrate der Teilchen sekundärer kosmischer Strahlung am Ort der Messvorrichtung (10) zu korrigieren.

**8.** Messvorrichtung (10) nach einem der voranstehenden Ansprüche, ferner aufweisend:

ein Kommunikationsmodul (18), welches dazu eingerichtet ist, zumindest einen Teil der Messdaten von wenigstens einer externen Sendestation zu empfangen,
wobei die Auswerteeinheit (14) dazu eingerichtet ist, die korrigierte Zählrate (202) basierend auf der Detektorzählrate (200) und basierend auf den über das Kommunikationsmodul (18) empfangenen Messdaten zu ermitteln.

**9.** Messanordnung (10) nach Anspruch 8,
wobei das Kommunikationsmodul (18) dazu eingerichtet ist, Luftdruckdaten eines erdatmosphärischen Luftdrucks am Ort der Messvorrichtung (10) und/oder Wetterdaten zur Beschreibung wenigstens eines Parameters der Erdatmosphäre, insbesondere einer effektiven atmosphärischen Temperatur, einer Höhe der 100 hPa Isobaren der Erdatmosphäre und/oder einer Temperatur der 100 hPa Isobaren der Erdatmosphäre, zu empfangen.

**10.** Messvorrichtung (10) nach einem der Ansprüche 8 oder 9,
wobei das Kommunikationsmodul (18) dazu eingerichtet ist, Weltraumwetterdaten zur Beschreibung wenigstens eines Parameters des Weltraumwetters zu empfangen.

**11.** Messvorrichtung (10) nach einem der Ansprüche 8 bis 10,
wobei das Kommunikationsmodul (18) dazu eingerichtet ist, Messdaten wenigstens eines entfernt von der Messvorrichtung (10) angeordneten Detektors zur Detektion von Teilchen sekundärer kosmischer Strahlung zu empfangen.

**12.** Messvorrichtung (10) nach einem der voranstehenden Ansprüche,

wobei der richtungsselektive Detektor (12) wenigstens zwei separate Szintillationszähler (12a, 12b) aufweist; und
wobei der richtungsselektive Detektor (12) dazu eingerichtet ist, die Detektorzählrate (200) basierend auf einer Koinzidenz von Messereignissen in den wenigstens zwei Szintillationszählern (12a, 12b) zu ermitteln.

**13.** Verwendung einer Messvorrichtung (10) nach einem der voranstehenden Ansprüche als Grenzstandmessgerät (10) zur Bestimmung eines Grenzstandes eines Mediums (101).

**14.** Verfahren zur Bestimmung eines Füllstandes eines Mediums (101) mit einer Messvorrichtung (10) nach einem der Ansprüche 1 bis 12, das Verfahren aufweisend die folgenden Schritte:

Ermitteln, mit einem richtungsselektiven Detektor (12) der Messvorrichtung (10), einer Detektorzählrate (200), welche mit einer Flussrate von Teilchen der sekundären kosmischen Strahlung nach zumindest teilweisem Durchtritt durch das Medium (101) korreliert,
Korrigieren, mit einer Auswerteeinheit (14) der Messvorrichtung (10), der Detektorzählrate (200) basierend auf Messdaten, welche mit wenigstens einem Einfluss auf die Flussrate der Teilchen sekundärer kosmischer Strahlung am Ort der Messvorrichtung (10) in Zusammenhang stehen, unter Ermitteln einer auf den wenigstens einen Einfluss korrigierten Zählrate (202); und
Bestimmen des Füllstandes des Mediums (101) basierend auf der korrigierten Zählrate (202).

**Claims**

**1.** A measuring device (10), configured to determine a fill level of a medium (101), the measuring device (10) comprising:

a direction-selective detector (12), which is configured to detect particles of the secondary cosmic radiation after at least partial passage through the medium (101) and to determine a detector counting rate (200) correlating with a flow rate of the particles of secondary cosmic radiation at the location of the measuring device (10); and
an evaluation unit (14), which is configured to:

- based on the detector counting rate (200) determined by the detector (12) and based on measurement data in connection with at least one influence on the flux rate of the particles of secondary cosmic radiation at the location of the measuring device (10), to determine a counting rate (202) corrected for the at least one influence;
- determining the fill level of the medium (101) based on the corrected counting rate (202); and

wherein the measuring device (10) comprises a single direction-selective detector (12) for detecting the particles of secondary cosmic radiation, which are muons, electrons, positrons, photons, pions and/or neutrons.

2. Measuring device (10) according to claim 1,

wherein the direction-selective detector (12) is configured to detect muons of the secondary cosmic radiation; and/or wherein the direction-selective detector (12) is configured to determine a detector counting rate (200) correlating with a flux rate of secondary cosmic muons.

3. Measuring device (10) according to any one of the preceding claims, wherein the measuring data comprise at least one element selected from the group consisting of weather data for describing at least one parameter of the earth's atmosphere, air pressure data of an earth atmospheric air pressure, temperature data for describing a temperature of the earth's atmosphere, weather data for describing an effective temperature of the earth's atmosphere, weather data for describing an altitude and a temperature of a reference layer of the earth's atmosphere, space weather data for describing at least one parameter of the space weather, solar data for describing solar activity, solar data for describing an intensity of the solar wind, satellite data for CGS:YW describing at least one parameter of the space weather, calendar data for describing a time point within a solar cycle, geographic data for describing geographic coordinates of the location of the measuring device, magnetospheric data for describing at least one parameter of the Earth's magnetosphere, and measurement data of at least one detector located remotely from the measuring device for detecting particles of secondary cosmic radiation.

4. Measuring device (10) according to any one of the preceding claims,

wherein the measurement data comprise air pressure data of an earth atmospheric air pressure at the location of the measurement device (10); and/or wherein the at least one influence comprises a shielding of the particles of secondary cosmic radiation by the earth atmosphere, in particular by layers of the earth atmosphere close to the ground.

5. Measuring device (10) according to any one of the preceding claims, further comprising:

a pressure sensor (16) which is coupled to the evaluation unit (14) and which is configured to determine air pressure data of the earth-atmospheric air pressure; and wherein the measurement data comprise the air pressure data determined with the pressure sensor (16).

6. Measuring device (10) according to any one of claims 4 or 5, wherein the evaluation unit (14) is configured to determine the corrected counting rate (202) based on an exponential relationship between the detector counting rate (200) and the air pressure.

7. Measuring device (10) according to any one of the preceding claims, further comprising:

a timer (20) for detecting calendar data, wherein the measurement data comprise the calendar data detected by the timer (20); and wherein the evaluation unit (14) is configured to correct the detector counting rate (200) based on the calendar data with respect to an influence of the solar activity on the flux rate of the particles of secondary cosmic radiation at the location of the measuring device (10).

8. Measuring device (10) according to any one of the preceding claims, further comprising:

a communication module (18), which is configured to receive at least a portion of the measurement data from at least one external transmitting station; wherein the evaluation unit (14) is configured to determine the corrected counting rate (202) based on the detector count rate (200) and based on the measurement data received via the communication module (18)..

9. Measuring device (10) according to claim 8, wherein the communication module (18) is configured to receive air pressure data of an earth atmospheric air pressure at the location of the measuring device (10) and/or weather data for describing at least one parameter of the earth atmosphere, in particular an effective atmospheric temperature, a height of the 100 hPa isobars of the earth atmosphere and/or a temperature of the 100 hPa isobars of the earth atmosphere.

10. Measuring device (10) according to any one of claims 8 or 9,
wherein the communication module (18) is configured to receive space weather data for describing at least one parameter of the space weather.

11. Measuring device (10) according to any one of claims 8 to 10,
wherein the communication module (18) is configured to receive measurement data from at least one detector arranged remotely from the measuring device (10) for detecting particles of secondary cosmic radiation.

12. Measuring device (10) according to any one of the preceding claims"

wherein the direction-selective detector (12) comprises at least two separate scintillation counters (12a, 12b); and
wherein the direction-selective detector (12) is configured to determine the detector counting rate (200) based on a coincidence of measurement events in the at least two scintillation counters (12a, 12b).

13. Use of a measuring device (10) according to any one of the preceding claims as a fill level limit measuring device (10) for determining a fill level limit of a medium (101).

14. Method for determining a fill level of a medium (101) with a measuring device (10) according to any one of claims 1 to 12, the method comprising the steps of:

Determining, with a direction-selective detector (12) of the measuring device (10), a detector counting rate (200) which correlates with a flux rate of particles of the secondary cosmic radiation after at least partial passage through the medium (101);
correcting, with an evaluation unit (14) of the measuring device (10), the detector counting rate (200) based on measurement data, which are in connection with at least one influence on the flux rate of the particles of secondary cosmic radiation at the location of the measuring device (10), by determining a counting rate (202) corrected for the at least one influence; and
determining the fill level of the medium (101) based on the corrected counting rate (202).

**Revendications**

1. Dispositif de mesure (10), conçu pour déterminer un niveau de remplissage d'un milieu (101), le dispositif de mesure (10) comportant :

un détecteur (12) à sélectivité directionnelle, qui est conçu pour détecter des particules du rayonnement cosmique secondaire après leur passage au moins partiel à travers le milieu (101) et déterminer un taux de comptage de détecteur (200) en corrélation avec un débit des particules de rayonnement cosmique secondaire à l'emplacement du dispositif de mesure (10) ; et
une unité d'évaluation (14), qui est conçue pour :

- sur la base du taux de comptage de détecteur (200) déterminé par le détecteur (12) et sur la base de données de mesure, qui sont en lien avec au moins une influence sur le débit des particules de rayonnement cosmique secondaire à l'emplacement du dispositif de mesure (10), déterminer un taux de comptage corrigé (202) selon l'au moins une influence ;
- sur la base du taux de comptage corrigé (202), déterminer le niveau de remplissage du milieu (101) ; et

dans lequel le dispositif de mesure (10) comporte un seul détecteur (12) à sélectivité directionnelle pour détecter les particules de rayonnement cosmique secondaire, qui sont des muons, des électrons, des positons, des photons, des pions et/ou des neutrons.

2. Dispositif de mesure (10) selon la revendication 1,

dans lequel le détecteur (12) à sélectivité directionnelle est conçu pour détecter des muons du rayonnement cosmique secondaire ; et/ou
dans lequel le détecteur (12) à sélectivité directionnelle est conçu pour déterminer un taux de comptage de détecteur (200) en corrélation avec un débit de muons cosmiques secondaires.

3. Dispositif de mesure (10) selon l'une des revendications précédentes, dans lequel les données de mesure comprennent au moins un élément sélectionné dans le groupe constitué de données météorologiques destinées à décrire au moins un paramètre de l'atmosphère terrestre, données de pression d'air d'une pression d'air de l'atmosphère terrestre, données de température destinées à décrire une température de l'atmosphère terrestre, données météorologiques destinées à décrire une température effective de l'atmosphère terrestre, données météorologiques destinées à décrire une hauteur et une température d'une couche de référence de l'atmosphère terrestre, données météorologiques de l'espace destinées à décrire au moins un paramètre de la météorologie de l'espace, données solaires destinées à décrire l'activité solaire, données solaires destinées à décrire une intensité du vent solaire, données satellites destinées à décrire au moins un paramètre de la météorologie de l'espace, données calendaires destinées à décrire un instant dans un cycle solaire calendaire, données géographiques destinées à décrire des coordonnées géographiques de l'emplacement du dispositif de mesure, données magnétosphériques destinées à décrire au moins un paramètre de la magnétosphère de la Terre et données de mesure d'au moins un détecteur disposé à distance du dispositif de mesure pour détecter des particules de rayonnement cosmique secondaire.

4. Dispositif de mesure (10) selon l'une des revendications précédentes,

   dans lequel les données de mesure comprennent des données de pression d'air d'une pression d'air de l'atmosphère terrestre à l'emplacement du dispositif de mesure (10) ; et/ou
   dans lequel l'au moins une influence comprend une protection contre les particules de rayonnement cosmique secondaire par l'atmosphère terrestre, en particulier par des couches proches du sol de l'atmosphère terrestre.

5. Dispositif de mesure (10) selon l'une des revendications précédentes, comportant en outre :

   un capteur de pression (16), qui est couplé à l'unité d'évaluation (14) et qui est conçu pour déterminer des données de pression d'air de la pression d'air de l'atmosphère terrestre ; et
   dans lequel les données de mesure comprennent les données de pression d'air déterminées par le capteur de pression (16) .

6. Dispositif de mesure (10) selon l'une des revendications 4 ou 5,
   dans lequel l'unité d'évaluation (14) est conçue pour déterminer le taux de comptage corrigé (202) sur la base d'une relation exponentielle entre le taux de comptage de détecteur (200) et la pression d'air.

7. Dispositif de mesure (10) selon l'une des revendications précédentes, comportant en outre :

   une horloge (20) destinée à déterminer des données calendaires,
   dans lequel les données de mesure comprennent les données calendaires détectées au moyen de l'horloge (20) ; et
dans lequel l'unité d'évaluation (14) est conçue pour corriger le taux de comptage de détecteur (200) sur la base des données calendaires en ce qui concerne une influence de l'activité solaire sur le débit des particules de rayonnement cosmique secondaire à l'emplacement du dispositif de mesure (10).

8. Dispositif de mesure (10) selon l'une des revendications précédentes, comportant en outre :

   un module de communication (18), qui est conçu pour recevoir au moins une partie des données de mesure provenant d'au moins une station d'émission externe ;
   dans lequel l'unité d'évaluation (14) est conçue pour déterminer le taux de comptage corrigé (202) sur la base du taux de comptage de détecteur (200) et sur la base des données de mesure reçues par le biais du module de communication (18).

9. Agencement de mesure (10) selon la revendication 8,
   dans lequel le module de communication (18) est conçu pour recevoir des données de pression d'air d'une pression d'air de l'atmosphère terrestre à l'emplacement du dispositif de mesure (10) et/ou des données météorologiques destinées à décrire au moins un paramètre de l'atmosphère terrestre, en particulier une température atmosphérique effective, une hauteur des isobares 100 hPa de l'atmosphère terrestre et/ou une température des isobares 100 hPa de l'atmosphère terrestre.

10. Dispositif de mesure (10) selon l'une des revendications 8 ou 9,
    dans lequel le module de communication (18) est conçu pour recevoir des données météorologiques de l'espace destinées à décrire au moins un paramètre de la météorologie de l'espace.

11. Dispositif de mesure (10) selon l'une des revendications 8 à 10,
    dans lequel le module de communication (18) est conçu pour recevoir des données de mesure d'au moins un détecteur disposé à distance du dispositif de mesure (10) destiné à détecter des particules de rayonnement cosmique secondaire.

12. Dispositif de mesure (10) selon l'une des revendications précédentes,

    dans lequel le détecteur (12) à sélectivité directionnelle comporte au moins deux détecteurs à scintillation (12a, 12b) ; et
    dans lequel le détecteur (12) à sélectivité directionnelle est conçu pour déterminer le taux de comptage de détecteur (200) sur la base d'une coïncidence d'événements de mesure dans les au moins deux détecteurs à scintillation (12a, 12b) .

13. Utilisation d'un dispositif de mesure (10) selon l'une des revendications précédentes comme appareil de mesure de niveau (10) pour déterminer un niveau d'un milieu (101).

14. Procédé de détermination d'un niveau de remplissage d'un milieu (101) avec un dispositif de mesure (10) selon l'une des revendications 1 à 12, le procédé comportant les étapes suivantes :

   détermination, avec un détecteur (12) à sélectivité directionnelle du dispositif de mesure (10), d'un taux de comptage de détecteur (200) qui est en corrélation avec un débit de particules du rayonnement cosmique secondaire après leur passage au moins en partie à travers le milieu (101) ;
   la correction, avec une unité d'évaluation (14) du dispositif de mesure (10), du taux de comptage de détecteur (200) sur la base de données de mesure, qui sont en lien avec au moins une influence sur le débit des particules de rayonnement cosmique secondaire à l'emplacement du dispositif de mesure (10), ce qui permet de déterminer un taux de comptage corrigé (202) selon l'au moins une influence ; et
   détermination du niveau de remplissage du milieu (101) sur la base du taux de comptage corrigé (202).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2011035151 A1
- US 5218202 A
- US 20160170072 A1
- US 2015287237 A1

**In der Beschreibung aufgeführte Nicht-Patentliteratur**

- **S. PROCUREUR.** Muon imaging: Principles, technologies and applications. *NUCLEAR INSTRUMENTS & METHODS IN PHYSICS RESEARCH. SECTION A,* 07. September 2017, vol. 878, 169-179
- **G. SARACINO et al.** Imaging of underground cavities with cosmic-ray muons from observations at Mt. Echia (Naples). *SCIENTIFIC REPORTS,* 26. April 2017, vol. 7 (1
- **HARUO MIYADERA et al.** Imaging Fukushima Dai-ichi reactors with muons. *AIP ADVANCES,* 24. Mai 2013, vol. 3 (5), 052133
- **T. KUWABARA et al.** Real-time cosmic ray monitoring system for space weather : COSMIC RAY MONITORING SYSTEM. *SPACE WEATHER,* 01. August 2006, vol. 4 (8